# EUROPÄISCHE PATENTSCHRIFT

(11) **EP 2 756 281 B1**
(45) Veröffentlichungstag und Bekanntmachung des Hinweises auf die Patenterteilung: **09.09.2015**
(21) Anmeldenummer: 12758850.7
(22) Anmeldetag: 11.09.2012
(51) Int. Cl.: G01N 1/22, G01N 15/02, F01N 3/02

(54) **VERFAHREN UND VORRICHTUNG ZUR ERMITTLUNG DER KONZENTRATION VON AEROSOLEN IN HEIßEN GASEN, INSBESONDERE IN ABGASEN VON VERBRENNUNGSKRAFTMASCHINEN**
METHOD AND DEVICE FOR DETERMINING THE CONCENTRATION OF AEROSOLS IN HOT GASES, PARTICULARLY IN EXHAUST GASES OF INTERNAL COMBUSTION ENGINES
PROCÉDÉ ET DISPOSITIF DE DÉTERMINATION DE LA CONCENTRATION D'AÉROSOLS DANS DES GAZ CHAUDS, NOTAMMENT DANS DES GAZ D'ÉCHAPPEMENT DE MOTEURS À COMBUSTION INTERNE

(30) Priorität: 12.09.2011 AT 13002011
(43) Veröffentlichungstag der Anmeldung: 23.07.2014
(73) Patentinhaber: AVL List GmbH, 8020 Graz (AT)
(72) Erfinder: GIECHASKIEL, Barouch, 21020 Ranco (VA) (IT); BERGMANN, Alexander, A-8052 Graz (AT)
(74) Vertreter: Patentanwälte Pinter & Weiss OG
(86) Internationale Anmeldenummer: PCT/EP2012/067723
(87) Internationale Veröffentlichungsnummer: WO 2013/037765

(56) Entgegenhaltungen:
- WO-A2-2007/067822
- US-A- 5 279 146
- US-A1- 2007 163 233

## Beschreibung

Die Erfindung betrifft ein Verfahren zur Ermittlung der Konzentration von Aerosolen in heißen Gasen, insbesondere in Abgasen von Verbrennungskraftmaschinen, die Entfernung von volatilen und semi-volatilen Partikeln durch Erhitzung des Abgases, sowie die Konzentrationsmessung der Aerosole, gegebenenfalls in einem Teilstrom eines gegebenenfalls verdünnten Abgasstroms, sowie eine Vorrichtung zur Durchführung des Verfahrens, mit einem Teilsystem zur Entfernung von volatilen und semi-volatilen Partikeln durch Erhitzung des Abgases, sowie einem Messsystem zur Konzentrationsmessung der Aerosole, gegebenenfalls mit einer Einrichtung zur Abzweigung eines Teilstroms des Abgasstroms in das Messsystem, sowie gegebenenfalls einem System zur Verdünnung des Abgasstroms.

Für die Ermittlung der Aerosolkonzentration im Abgas von Verbrennungskraftmaschinen, sowohl für Test- und Forschungszwecke, aber auch für die Überprüfung der gesetzlichen Vorgaben, sind bestimmte Prozessabläufe notwendig, um eine genaue Aussage treffen zu können. Auch in die Gesetzgebung haben grundlegende Verfahrensabläufe Eingang gefunden.

Typischerweise findet eine heiße Verdünnung statt, wobei in einem beheizten Rohr mit Wandtemperaturen zwischen 300 und 400°C flüchtige und semi-flüchtige Partikel entfernt werden. Dieses System wird "Volatile Particle Remover (VPR)" bezeichnet. Die Konzentration der Aerosole wird dann mit einem Partikelzähler bestimmt, dessen Eingangstemperatur nicht höher als 35°C liegen sollte.

Je nach Hubraum und/oder Leistung der Verbrennungskraftmaschine zieht der "Volatile Particle Remover" seine Proben aus einem Vollstrom- oder Teilstrom-Verdünnungssystem. Für Forschungszwecke wird oftmals auch direkt aus dem Abgassystem eine Probe gezogen.

Der Nachteil all dieser Systeme ist deren hoher Energieverbrauch, so dass sie sich insbesondere für On-Board-Messsysteme nicht gut eignen. Überdies benötigen solche Systeme eine externe Druckluftversorgung, sie arbeiten mit hohen Fließraten der Proben, was speziell für Teilstrom-Verdünnungssysteme problemtisch ist, und insgesamt sind die Fließraten im System sehr hoch, was weiter zum hohen Energieverbrauch beiträgt.

Die Dokumente US5279146 und WO2007067822 stellen ein Verfahren und eine Vorrichtung zur Ermittlung der Konzentration von Aerosolen in heißen Gasen des Stands der Technik dar.

Die Aufgabe der vorliegenden Erfindung waren daher ein verbessertes Verfahren und eine dafür geeignete Vorrichtung, welche die oben genannten Nachteile vermeidet und mit geringerem Energiebedarf genaue Messungen der Aerosolkonzentration im Abgas von Verbrennungskraftmaschinen ermöglicht.

Zur Lösung dieser Aufgabe ist das eingangs beschriebene Verfahren dadurch gekennzeichnet, dass in einer ersten Stufe das Abgas in zwei Teilströme aufgeteilt wird, die beide erhitzt werden, und von welchen einer der Teilströme, vorzugsweise vor der Erhitzung, zumindest einmal gefiltert wird, dass die beiden Teilströme anschließend wieder vereinigt werden, dass in einer zweiten Stufe das Abgas wieder in zwei Teilströme aufgeteilt wird, wobei einer der Teilströme noch höher erhitzt wird als in der ersten Stufe und wobei der andere Teilstrom zumindest einmal gefiltert wird, und dass die beiden Teilströme anschließend wieder vereinigt werden und im Gesamtstrom die Konzentrationsmessung durchgeführt wird.

Gemäß einer ersten vorteilhaften Ausführungsform ist vorgesehen, dass in der ersten Stufe beide Teilströme auf zumindest 150°C erhitzt werden.

Vorteilhafterweise wird in der zweiten Stufe der ungefilterte Teilstrom auf zumindest 300°C erhitzt.

Ein weiteres optionales Erfindungsmerkmal ist dadurch gegeben, dass in der zweiten Stufe der nicht erhitzte Teilstrom vor der ersten Filterung gekühlt wird.

Gemäß einer weiteren Ausführungsform der Erfindung ist vorgesehen, dass der nicht erhitzte Teilstrom auf eine Temperatur herabgekühlt wird, dass der Gesamtstrom nach der Vereinigung der Teilströme eine Temperatur von 35°C nicht überschreitet.

Vorzugsweise kann noch vorgesehen sein, dass Durchflussmessungen im ungefilterten Teilstrom, vorzugsweise zusätzlich auch im zusammengeführten Gesamtstrom, durchgeführt werden.

Die eingangs beschriebene Vorrichtung ist zur Lösung der oben gestellten Aufgabe gekennzeichnet durch ein erstes Verzweigungsstück zur Aufteilung des Abgases in zwei Teilströme, Heizeinrichtungen für beide Teilströme und zumindest eine Filtereinrichtung in einem der Teilströme, vorzugsweise vor der Heizeinrichtung, weiters durch ein Vereinigungsstück, in welchem die beiden Teilströme zusammengeführt werden, weiters durch ein dem Vereinigungsstück nachgeordnetes zweites Verzweigungsstück zur nochmaligen Aufteilung in zwei Teilströme, wobei eine weitere Heizeinrichtung für einen der Teilströme und zumindest eine weitere Filtereinrichtung im unbeheizten Teilstrom vorgesehen sind, und weiters durch ein zweites Vereinigungsstück vor dem Messsystem, in welchem Vereinigungsstück die beiden Teilströme anschließend wieder vereinigt werden.

Gemäß einer vorteilhaften Ausführungsform dieser Vorrichtung ist nach dem ersten Vereinigungsstück und vor der oder jeder weiteren Filtereinrichtung eine Kühleinrichtung.

Eine weitere vorteilhaften Ausgestaltung der Vorrichtung ist gekennzeichnet durch Durchflussmesseinrichtungen zwischen zumindest einem Verzweigungsstück und dem nachfolgenden Vereinigungsstück, jeweils im ungefilterten Teilstrom.

Bei einer derartigen Vorrichtung kann auch vorteilhafterweise eine zusätzliche Durchflussmesseinrichtung zwischen dem letzten Vereinigungsstück und dem Messsystem vorhanden sein.

In der nachfolgenden Beschreibung soll die Erfindung anhand eines Ausführungsbeispiels, das in schematischer Darstellung auch als Zeichnungsfigur beigefügt ist, näher erläutert werden.

Das Abgas einer Verbrennungskraftmaschine wird dem erfindungsgemäßen System über eine Leitung 1 zugeführt und gelangt dann zu einem ersten Verzweigungsstück 2, wo das Abgases in zwei Teilströme aufgeteilt wird. Beide Teilströme werden mittels Heizeinrichtungen 3, beispielsweise Rohrleitungen mit beheizten Wänden, erwärmt, typischerweise auf eine Temperatur von zumindest 150°C. In einer der Rohrleitungen sind vorzugsweise vor der Heizeinrichtung 3 ein Ventil 4 zur Einstellung des Verdünnungsverhältnisses sowie beispielhaft drei Filter 5 vorgesehen, die Feuchtigkeit, Kohlenwasserstoffe und bestimmte Partikel abscheiden. Es könnte aber eine beliebige Filteranordnung auch nur mit einem oder zwei der besagten Filter verwendet werden. In der Leitung des ungefilterten Teilstroms ist eine Durchflussmesseinrichtung 6, beispielsweise nach dem Kapillarprinzip, eingesetzt.

Nach Filterung und Durchflussmessung werden die separaten Teilströme durch das Vereinigungsstück 7 wieder zusammengeführt, um kurz danach durch ein nachgeordnetes zweites Verzweigungsstück 8 nochmals in zwei Teilströme aufgeteilt zu werden. Für einen der beiden Teilströme ist nach dem Verzweigungsstück 8 wieder eine weitere Heizeinrichtung 9 vorgesehen, durch welche dieser ungefilterte Teilstrom auf zumindest 300°C erhitzt wird, damit dann alle flüchtigen und semi-flüchtigen Partikel entfernt werden. Auch ist erneut in der Leitung des ungefilterten Teilstroms eine weitere Durchflussmesseinrichtung 10, beispielsweise auch nach dem Kapillarprinzip, eingesetzt.

Der unbeheizte Teilstrom wird vorzugsweise durch eine in die Rohrleitung dafür eingesetzte Kühleinrichtung 11 heruntergekühlt, bevor er nach Passieren eines Ventils 12, um auch hier das Verdünnungsverhältnis einstellen zu können, noch zumindest ein Filter 13 passiert. Vorzugsweise sind auch hier wiederum drei Filter 13 vorgesehen, die Feuchtigkeit, Kohlenwasserstoffe und bestimmte Partikel abscheiden.

In einem zweiten Vereinigungsstück 14 werden dann der heiße Teilstrom nach der Durchflussmessung und der unbeheizte, gefilterte und vorzugsweise gekühlte Teilstrom erneut vereinigt und der Gesamtstrom dem Messsystem 15 zugeführt, welches im Prinzip auf beliebiger Basis arbeiten kann, vorteilhafterweise aber eine Pumpe aufweist, um das Abgas durch das System zu Saugen. Der gekühlte Teilstrom wird vorteilhafterweise durch die Kühleinrichtung 11 auf eine Temperatur gebracht, dass der vereinigte Gesamtstrom eine Temperatur von 35°C nicht überschreitet. Allenfalls kann auch noch eine weitere Durchflussmesseinrichtung 16 für die Gesamtstrom vorgesehen sein.

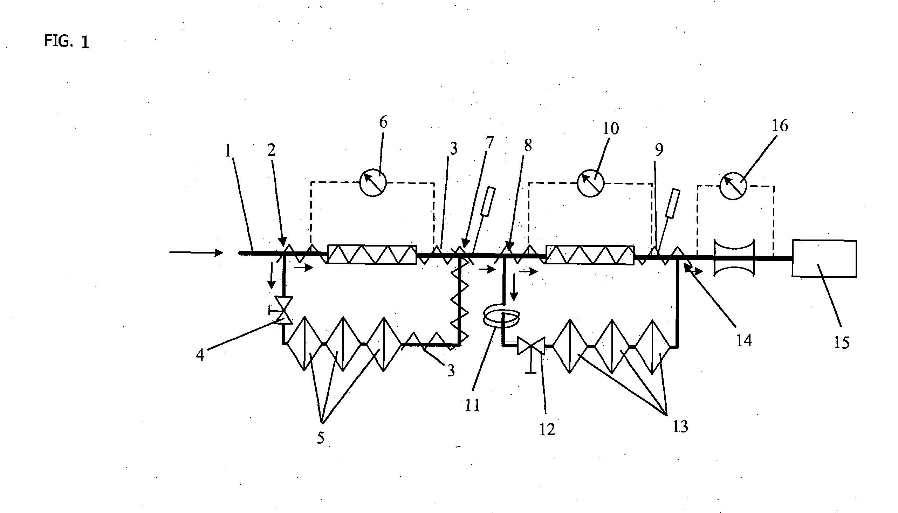

## Patentansprüche

1. Verfahren zur Ermittlung der Konzentration von Aerosolen in heißen Gasen, insbesondere in Abgasen von Verbrennungskraftmaschinen, die Entfernung von volatilen und semi-volatilen Partikeln durch Erhitzung des Abgases, sowie die Konzentrationsmessung der Aerosole, gegebenenfalls in einem Teilstrom eines gegebenenfalls verdünnten Abgasstroms, wobei in einer ersten Stufe das Abgas in zwei Teilströme aufgeteilt wird, die beide erhitzt werden, und von welchen einer der Teilströme, vorzugsweise vor der Erhitzung, zumindest einmal gefiltert wird, dass die beiden Teilströme anschließend wieder vereinigt werden, **gekennzeichnet durch** dass in einer zweiten Stufe das Abgas wieder in zwei Teilströme aufgeteilt wird, wobei einer der Teilströme noch höher erhitzt wird als in der ersten Stufe und wobei der andere Teilstrom zumindest einmal gefiltert wird, und dass die beiden Teilströme anschließend wieder vereinigt werden und im Gesamtstrom die Konzentrationsmessung durchgeführt wird.

2. Verfahren nach Anspruch 1, **dadurch gekennzeichnet, dass** in der ersten Stufe beide Teilströme auf zumindest 150°C erhitzt werden.

3. Verfahren nach Anspruch 1, **dadurch gekennzeichnet, dass** in der zweiten Stufe der ungefilterte Teilstrom auf zumindest 300°C erhitzt wird.

4. Verfahren nach Anspruch 1, **dadurch gekennzeichnet, dass** in der zweiten Stufe der nicht erhitzte Teilstrom vor der ersten Filterung gekühlt wird.

5. Verfahren nach Anspruch 4, **dadurch gekennzeichnet, dass** der nicht erhitzte Teilstrom auf eine Temperatur herabgekühlt wird, dass der Gesamtstrom nach der Vereinigung der Teilströme eine Temperatur von 35°C nicht überschreitet.

6. Verfahren nach einem der Ansprüche 1 bis 5, **dadurch gekennzeichnet, dass** Durchflussmessungen im ungefilterten Teilstrom, vorzugsweise zusätzlich auch im zusammengeführten Gesamtstrom, durchgeführt werden.

7. Vorrichtung zur Ermittlung der Konzentration von Aerosolen in heißen Gasen, insbesondere in Abgasen von Verbrennungskraftmaschinen, mit einem Teilsystem zur Entfernung von volatilen und semi-volatilen Partikeln durch Erhitzung des Abgases, sowie einem Messsystem zur Konzentrationsmessung der Aerosole, gegebenenfalls mit einer Einrichtung zur Abzweigung eines Teilstroms des Abgasstroms in das Messsystem, sowie gegebenenfalls einem System zur Verdünnung des Abgasstroms, mit ein erstes Verzweigungsstück (2) zur Aufteilung des Abgases in zwei Teilströme, Heizeinrichtungen (3) für beide Teilströme und zumindest eine Filtereinrichtung (5) in einem der Teilströme, vorzugsweise vor der Heizeinrichtung (3), weiters durch ein Vereinigungsstück (7) in welchem die beiden Teilströme zusammengeführt werden, **gekennzeichnet durch** ein dem Vereinigungsstück (7) nachgeordnetes zweites Verzweigungsstück (8) zur nochmaligen Aufteilung in zwei Teilströme, wobei eine weitere Heizeinrichtung (9) für einen der Teilströme und zumindest eine weitere Filtereinrichtung (13) im unbeheizten Teilstrom vorgesehen sind, und weiters **durch** ein zweites Vereinigungsstück (14) vor dem Messystem (15), in welchem Vereinigungsstück (14) die beiden Teilströme anschließend wieder vereinigt werden.

8. Vorrichtung nach Anspruch 7, **dadurch gekennzeichnet, dass** nach dem ersten Vereinigungsstück (7) und vor der oder jeder weiteren Filtereinrichtung (13) zumindest eine Kühleinrichtung (11) vorgesehen ist.

9. Vorrichtung nach Anspruch 7 oder 8, **gekennzeichnet durch** Durchflussmesseinrichtungen (6, 10) zwischen zumindest einem Verzweigungsstück und dem nachfolgenden Vereinigungsstück, jeweils im ungefilterten Teilstrom.

10. Vorrichtung nach Anspruch 9, **gekennzeichnet durch** eine zusätzliche Durchflussmesseinrichtung (16) zwischen dem letzten Vereinigungsstück (14) und dem Messsystem (15).

## Claims

1. Method for determining the concentration of aerosols in hot gases, particularly in exhaust gases of internal combustion engines, removing volatile and semi-volatile particles by heating the exhaust gas, and measuring the concentration of the aerosols, optionally in a partial flow of an optionally diluted exhaust gas flow, wherein in a first stage, the exhaust gas is divided into two partial flows, both of which are heated, with one of the partial flows being filtered at least once, preferably before heating, and that the two partial flows are subsequently recombined, **characterized in that** in a second stage, the exhaust gas is again divided into two partial flows, with one of the partial flows being heated even further than in the first stage, and with the other partial flow being filtered at least once, and that the two partial flows are subsequently recombined, and the concentration measurement is performed on the total flow.

2. Method as set forth in claim 1, **characterized in that** both partial flows are heated to at least 150° C in the first stage.

3. Method as set forth in claim 1, **characterized in that** the unfiltered partial flow is heated to at least 300° C in the second stage.

4. Method as set forth in claim 1, **characterized in that** the unheated partial flow is cooled before the first filtering in the second stage.

5. Method as set forth in claim 4, **characterized in that** the unheated partial flow is cooled to a temperature which is such that the total flow does not exceed a temperature of 35° C after combining of the partial flows.

6. Method as set forth in any one of claims 1 to 5, **characterized in that** flow rate measurements are performed in the unfiltered partial flow, and preferably in the combined total flow as well.

7. Device for determining the concentration of aerosols in hot gases, particularly in exhaust gases of internal combustion engines, comprising a subsystem for the removal of volatile and semi-volatile particles by heating the exhaust gas, as well as a measurement system for measuring the concentration of the aerosols, optionally with a device for branching-off a partial flow of the exhaust gas flow into the measurement system, as well as, optionally, a system for the dilution of the exhaust gas flow, with a first branching piece (2) for dividing the exhaust gas into two partial flows, heating devices (3) for both partial flows, and at least one filter device (5) in one of the partial flows, preferably before the heating device (3), and furthermore a combining piece (7) in which the two partial flows are combined, **characterized in that** by a second branching piece (8) arranged downstream from the combining piece (7) for dividing again into two partial flows, wherein another heating device (9) being provided for one of the partial flows and at least one additional filter device (13) being provided in the unheated partial flow and furthermore by a second combining piece (14) before the measurement system (15), in which combining piece (14) the two partial flows are subsequently recombined.

8. Device as set forth in claim 7, **characterized in that** at least one cooling device (11) is provided after the first combining piece (7) and before the or before each other filter device (13).

9. Device as set forth in claim 7 or 8, **characterized by** flow rate measurement devices (6, 10) between at least one branching piece and the subsequent combining piece, each in the unfiltered partial flow.

10. Device as set forth in claim 9, **characterized by** an additional flow rate measurement device (16) between the last combining piece (14) and the measurement system (15).

## Revendications

1. Procédé de détermination de la concentration d'aérosols dans des gaz chauds, en particulier dans des gaz d'échappement de moteurs à combustion, l'élimination de particules volatiles et semi-volatiles par chauffage du gaz d'échappement, et la mesure de la concentration des aérosols, le cas échéant dans un flux partiel d'un flux de gaz d'échappement éventuellement dilué, dans lequel, dans une première étape, le gaz d'échappement est divisé en deux flux partiels, chauffés l'un et l'autre, et parmi lesquels l'un des flux partiels, de préférence avant le chauffage, est filtré au moins une fois, les deux flux partiels étant ensuite de nouveau réunis, **caractérisé en ce que** dans une deuxième étape, le gaz d'échappement est de nouveau divisé en deux flux partiels, l'un des flux partiels étant chauffé à une température encore plus élevée que dans la première étape, et les deux flux partiels étant ensuite de nouveau réunis et la mesure de la concentration étant effectuée dans le flux total.

2. Procédé selon la revendication 1, **caractérisé en ce que** dans la première étape, les deux flux partiels sont chauffés à au moins 150° C.

3. Procédé selon la revendication 1, **caractérisé en ce que** dans la deuxième étape, le flux partiel non filtré est chauffé à au moins 300° C.

4. Procédé selon la revendication 1, **caractérisé en ce que** dans la deuxième étape, le flux partiel non chauffé est refroidi avant le premier filtrage.

5. Procédé selon la revendication 4, **caractérisé en ce que** le flux partiel non chauffé est refroidi à une température de façon à ce que le flux total ne dépasse pas une température de 35° C après la réunification des flux partiels.

6. Procédé selon l'une des revendications 1 à 5, **caractérisé en ce que** des mesures de débit sont effectuées dans le flux partiel non filtré, de préférence également dans le flux total réunifié.

7. Dispositif de détermination de la concentration d'aérosols dans des gaz chauds, en particulier dans des gaz d'échappement de moteurs à combustion, avec un système partiel pour l'élimination de particules volatiles et semi-volatiles par chauffage du gaz d'échappement, et un système de mesure pour mesurer la concentration des aérosols, le cas échéant avec un dispositif destiné à dévier un flux partiel du flux de gaz d'échappement dans le système de mesure, et éventuellement un système pour la dilution du flux de gaz d'échappement, avec une première pièce de bifurcation (2) pour la division du gaz d'échappement en deux flux partiels, des dispositifs de chauffage (3) pour les deux flux partiels et au moins un dispositifs de filtrage (5) dans l'un des flux partiels, de préférence en amont du dispositif de chauffage (3), et avec une pièce de réunification (7) dans laquelle les deux flux partiels sont réunis, **caractérisé par** une deuxième pièce de bifurcation (8) agencée en aval de la pièce de réunification (7), pour une nouvelle division en deux flux partiels, sachant qu'il est prévu un autre dispositif de chauffage (9) pour l'un des flux partiels et au moins un autre dispositif de filtrage (13) dans le flux partiel non chauffé, et en outre par une deuxième pièce de réunification (14) an amont du système de mesure (15), les deux flux partiels étant ensuite de nouveau réunis dans ladite pièce de réunification (14).

8. Dispositif selon la revendication 7, **caractérisé en ce qu'**il est prévu au moins un dispositif de refroidissement (11) en aval de la première pièce de réunification (7) et en amont de l'autre ou de chaque autre dispositif de filtrage (13).

9. Dispositif selon la revendication 7 ou 8, **caractérisé par** des débitmètres (6, 10) entre au moins l'une des pièces de bifurcation et la pièce de réunification suivante, respectivement dans le flux partiel non filtré.

10. Dispositif selon la revendication 9, **caractérisé par** un débitmètre supplémentaire (16) entre la dernière pièce de réunification (14) et le système de mesure (15).
